# EUROPÄISCHE PATENTSCHRIFT

(11) **EP 2 229 340 B1**
(45) Veröffentlichungstag und Bekanntmachung des Hinweises auf die Patenterteilung: **24.04.2013**
(21) Anmeldenummer: 08800450.2
(22) Anmeldetag: 29.09.2008
(51) Int. Cl.: C01B 31/22, F25D 3/14

(54) **APPARAT ZUR HERSTELLUNG VON TROCKENEIS ZUR VERWENDUNG IN GETRÄNKEN**
APPARATUS FOR PRODUCING DRY ICE FOR USE IN DRINKS
APPAREIL DE PRÉPARATION DE GLACE SÈCHE DESTINÉE À ÊTRE UTILISÉE DANS DES BOISSONS

(30) Priorität: 04.10.2007 DE 102007047621
(43) Veröffentlichungstag der Anmeldung: 22.09.2010
(73) Patentinhaber: Güntert, Bruno, 4132 Muttenz BL (CH)
(72) Erfinder: Güntert, Bruno, 4132 Muttenz BL (CH)
(74) Vertreter: Mötteli-Mantelli, Novella
(86) Internationale Anmeldenummer: PCT/CH2008/000404
(87) Internationale Veröffentlichungsnummer: WO 2009/043194

(56) Entgegenhaltungen:
- WO-A1-2007/031837
- JP-A- 60 131 818
- US-A- 4 374 658
- US-A- 5 528 907
- US-A- 6 148 636

## Beschreibung

Die Erfindung bezieht sich auf einen Apparat und ein Verfahren zur Bereitstellung von festem Kohlendioxid zur Verwendung in Getränken.

Die Herstellung von Trockeneis mit flüssigem Kohlendioxid aus einer unter Druck stehenden Kohlendioxid-Flasche mit Tauchrohr ist bekannt.

### Technischer Hintergrund und Stand der Technik

### Anwendungen von Trockeneis:

Trockeneis kommt zum Einsatz, wo temperaturempfindliche Substanzen wie z.B. Gewebe und Blut gelagert oder transportiert werden müssen. Trockeneis in Getränken kühlt diese und erzeugt gleichzeitig einen Nebeleffekt.

### Eigenschaften von Trockeneis:

Die Kühlleistung von Trockeneis beträgt bei Erwärmung von -79°C auf O°C circa 640 kJ/kg. Dies entspricht der 3.3 fachen Kühlleistung von herkömmlichem Eis. Beim Schmelzen resp. Verdampfen von Trockeneis entsteht keine Flüssigkeit, die dem Produkt oder dessen Verpackung schaden könnte. Trockeneis ist geruchs- und geschmacksfrei sowie Bakterien hemmend.

### Gefahren von Trockeneis:

Trockeneis (-79°C) ist sehr kalt. Direkter Kontakt mit ungeschützter Haut, z.B. Mund, kann Kalterfrierungen verursachen, d.h. Trockeneis darf nicht direkt in Berührung mit solcher kommen.

### Gefahren von Kohlendioxid-Gas:

Kohlendioxid-Gas kann in grösseren Konzentrationen narkotisierend wirken. Konzentrationen über 7 Vol.% in der Atemluft bewirken Bewusstlosigkeit und bei Konzentrationen von über 8 Vol.% in der Atemluft besteht Erstickungsgefahr.

### Verfügbarkeit und Lagerung von Trockeneis:

Trockeneis kann nicht über längere Zeit gelagert werden. Je nach Wohnort bzw. Zeitpunkt ist es für den Verbraucher mehr oder weniger schwierig, Trockeneis zu erhalten. Deshalb ist es vorteilhaft, kleinere Mengen Trockeneis direkt vor Ort herzustellen.

### Verfügbarkeit und Lagerung von Kohlendioxid-Flaschen:

Kohlendioxid-Flaschen mit Tauchrohr können ab Lager bei jeder Gasfirma bezogen werden und für unbeschränkte Zeit aufbewahrt werden.

### Prinzip der Herstellung von Trockeneis:

Für die Herstellung von Trockeneis wird flüssiges Kohlendioxid, nachfolgend CO₂ genannt, z.B. aus einer unter Druck stehenden CO₂-Flasche mit Tauchrohr entnommen.

Beim Einströmen des unter Druck stehenden flüssigen CO₂ in den drucklosen Apparat zur Herstellung von Trockeneis dehnt sich das flüssige CO₂ sehr schnell aus. Diese Ausdehnung bewirkt, dass sich die Temperatur des flüssigen CO₂ schlagartig erniedrigt - dieser Effekt wird auch als Joule-Thomson-Effekt bezeichnet. Dabei wird das flüssige CO₂ in den festen Aggregatzustand, sog. CO₂-Schnee, überführt. Dieser wird dann unter Druck verdichtet und zu Trockeneis gepresst.

### Herstellung von Trockeneis mit handelsüblichen Apparaten:

Den heutigen Herstellungs-Verfahren für die Anwendung von Trockeneis in Getränken und der Anwendung zur Lagerung von temperaturempfindlichen Substanzen haften mehrere, zum Teil gefährliche Nachteile (z.B. Kalterfrierung) an.

Handelsübliche Apparaturen zur Herstellung von Trockeneis mit flüssigem CO₂ aus Gasflaschen funktionieren wie folgt: Zum Starten des Herstellprozesses muss das Flaschenventil von Hand geöffnet werden. Auf diese Weise strömt flüssiges CO₂ aus der Flasche in den Apparat. Je nach Funktionsweise des Apparats muss nach Ablauf einer bestimmten Zeit, oder wenn Trockeneis-Partikel aus dem Apparat strömen, der Herstellprozess durch Schliessen des Flaschenventils von Hand beendet werden.

### Beendigung des Herstellprozesses - nach Zeit:

Die Herstellerangaben zur Einströmzeit des flüssigen CO₂ sind nur bedingt richtig. Denn die Einströmzeit des CO₂ ist abhängig vom Füllstand der CO2-Flasche und der Temperatur des flüssigen CO₂. Bei wärmeren Temperaturen dauert die Herstellung von Trockeneis länger als bei kühleren Temperaturen. Eine gleich bleibende Konsistenz (z.B. Dichte) des Trockeneis' ist deshalb nicht immer gewährleistet.

### Beendigung des Herstellprozesses - nach Sichtbarkeit von aus dem Apparat strömenden Trockeneis-Partikeln:

Bei Apparaten mit einer Überdrucksicherung z.B. wenn der Anpressdruck zwischen Deckel und Apparat definiert ist, kann anhand des ausströmenden CO₂-Gas und den Trockeneis-Partikeln erkannt werden, wann die Produktionskammer P mit Trockeneis gefüllt ist. Siehe hierzu auch U. S. Patent No. 4 374 658.

Beim Entweichen des CO₂-Gases und der Trockeneis-Partikel entsteht eine Schneewolke und ein lautes Zischen. Diese plötzlich auftretenden Geräusche bzw. Effekte können jemandem z.B. dem Anwender, einen Schrecken einjagen.

### Entnahme des Trockeneises aus der Produktionskammer:

Das Trockeneis wird manuell aus der Produktionskammer P entnommen. Damit ist der direkte Kontakt mit Trockeneis möglich. Es besteht Kaltverbrennungsgefahr.

### Zusammenfassung der Erfindung

Der Erfindung liegt die Aufgabe zugrunde, eine sichere sowie einfache Anwendung von Trockeneis in Getränken und zur Lagerung von temperaturempfindlichen Substanzen zu ermöglichen.

Diese Aufgabe wird gemäss Anspruch 1 durch einen Apparat zur Herstellung bzw. Bereitstellung von festem Kohlendioxid gelöst, welcher aufweist: eine Produktionskammer zur Aufnahme von gasförmigem und festem Kohlendioxid, die zumindest in einem Teilbereich ihrer Wand für gasförmiges Kohlendioxid durchlässig und für festes Kohlendioxid undurchlässig ist; eine Düse, die in die Produktionskammer mündet und an einen Kohlendioxid-Druckbehälter anschliessbar ist, um mit diesem in Fluidverbindung gebracht zu werden; und eine Kammeröffnung, die durch ein Verschlussmittel geöffnet und geschlossen werden kann, wobei an die Kammeröffnung der Produktionskammer ein Behälter heranführbar ist, der mit in der Produktionskammer gebildetem festem Kohlendioxid befüllbar ist. Dadurch kann das feste Kohlendioxid bzw. Trockeneis in einer nach aussen gesicherten Kammer hergestellt und dann unmittelbar in den Behälter gefüllt werden, ohne dass man es in die Hand nehmen muss.

Vorzugsweise besitzt der Apparat ein Transportmittel, mittels dem der Behälter an die Kammeröffnung der Produktionskammer heranführbar ist. Dies erhöht die Sicherheit beim Befüllen des Behälters mit Trockeneis.

Bei einer besonders vorteilhaften Ausführung des erfindungsgemässen Apparats sind das Verschlussmittel und das Transportmittel in einem Verschluss/Transport-Mittel angeordnet, das sowohl eine Verschluss-Funktion als auch eine Transport-Funktion hat. Dies trägt zur Kompaktheit des Apparats bei.

Der für gasförmiges Kohlendioxid durchlässige und für festes Kohlendioxid undurchlässige Teilbereich der Kammerwand kann durch eine Membran gebildet sein. Hierfür kann z.B. eine poröse Wand, ein Rohr mit kleinen Löchern oder ein feinmaschiges Textilgewebe verwendet werden. Die Durchlässigkeit für gasförmiges Kohlendioxid verhindert, dass sich in der Produktionskammer ein zu hoher Gasdruck aufbaut. Lediglich festes Kohlendioxid soll die Kammer füllen.

Die Produktionskammer kann ein Ausstossmittel besitzen, mittels dem in der Produktionskammer gebildetes festes Kohlendioxid aus der Produktionskammer ausstossbar ist. Dadurch wird das Entfernen von kompaktiertem festem Kohlendioxid aus der Kammer zum Befüllen des Behälters erleichtert.

Vorzugsweise ist das Verschlussmittel eine Vorrichtung mit einer Öffnung 11, wobei die Vorrichtung bewegbar ist zwischen einer Schliess-Stellung, in der ein für Gas undurchlässiger Bereich an der Kammeröffnung anliegt und diese verschliesst, und einer Öffnungs-Stellung, in der die Verschlussmittel-Öffnung mit der Kammeröffnung überlappend oder deckungsgleich angeordnet ist und diese freigibt.

Vorzugsweise ist das Transportmittel eine in einer Vorrichtung angeordnete Öffnung zur Aufnahme des Behälters, wobei die Vorrichtung bewegbar ist zwischen einer Aufnahme-Stellung, in welcher der Behälter in die Öffnung gesetzt werden kann, und einer Befüll-Stellung, in welcher der Behälter mit festem Kohlendioxid aus der Produktionskammer befüllt werden kann.

Der unter Verwendung des erfindungsgemässen Apparats mit Trockeneis zu befüllende Behälter kann ein durch einen Verschluss verschliessbarer Behälter sein. Vorzugsweise ist ein solcher Behälter durch die Bewegung der Vorrichtung verschliessbar ist. In diesem Fall besitzt der Apparat vorzugsweise einen Eingriffsbereich, gegenüber dem die Vorrichtung relativ bewegbar ist und der mit dem Verschluss des Behälters in Eingriff bringbar ist, um den Behälter-Verschluss gegen den Behälter zu drücken und diesen zu verschliessen. Dies ermöglicht eine besonders einfache und sichere Handhabung des erfindungsgemässen Apparats. Zweckmässigerweise ist das Verschlussmittel oder das Verschluss/Transportmittel durch einen Schieber oder eine Drehscheibe gebildet.

Das Ausstossmittel ist vorzugsweise ein Stössel, der auf den Innenraum der Produktionskammer einen Druck ausüben kann. Ein solcher Stössel kann daher einerseits durch direkten Kontakt mit dem in der Produktionskammer gebildeten Trockeneis dieses aus der Kammer ausstossen und kann andererseits mit dem Gasraum (vorwiegend gasförmiges Kohlendioxid) in der Produktionskammer wechselwirken.

Durch den Gasdruck im Innern der Kammer wirkt aber auch eine nach aussen gerichtete Kraft auf den Stössel. Dieser kann daher als (einfacher) Sensor oder als Aktor verwendet werden. Dies ist besonders vorteilhaft, wenn der Apparat ein Schaltmittel aufweist, mittels dem die Fluidverbindung zwischen der Düse und dem Kohlendioxid-Druckbehälter freigegeben oder blockiert werden kann.

Vorzugsweise wird das Schaltmittel durch den Druck in der Produktionskammer angesteuert, wobei die Ansteuerung insbesondere durch den Stössel erfolgt, auf den der Druck des Innenraums der Produktionskammer einwirkt.

Die eingangs genannte Aufgabe wird gemäss Anspruch 10 durch ein Verfahren zur Bereitstellung von festem Kohlendioxid unter Verwendung des erfindungsgemässen Apparats gelöst; wobei die folgenden Schritte erfolgen:
a) Schliessen einer Kammeröffnung in einer Produktionskammer, die über eine in die Produktionskammer mündende Düse mit einem Kohlendioxid-Druckbehälter in Fluidverbindung steht; b) Befüllen der Produktionskammer über die Düse mit expandierendem gasförmigen Kohlendioxid und sich niederschlagendem festem Kohlendioxid aus dem Kohlendioxid-Druckbehälter, wobei ein Teil des gasförmigen Kohlendioxids über einen für gasförmiges Kohlendioxid durchlässigen und für festes Kohlendioxid undurchlässigen Teilbereich der Kammerwand aus der Produktionskammer entweicht, während zumindest ein Grossteil des gebildeten festen Kohlendioxids in der Produktionskammer zurückgehalten wird; c) Heranführen eines Behälters an die verschlossene Kammeröffnung der Produktionskammer; d) Öffnen der Kammeröffnung der Produktionskammer; und e) Befüllen des Behälters mit in der Produktionskammer gebildetem festen Kohlendioxid.

### Kurze Beschreibung der Zeichnungen

Weitere Vorteile, Merkmale und Anwendungsmöglichkeiten der Erfindung ergeben sich aus der nun folgenden Beschreibung eines Ausführungsbeispiels anhand der Zeichnung, wobei:
Fig. 1 eine Schnittansicht des erfindungsgemässen Apparats zur Herstellung von Trockeneis und zur Befüllung des Trockeneis-Behälters zeigt;
Fig. 2 eine Seitenansicht des erfindungsgemässen Apparats von Fig. 1 zeigt;
Fig. 3A, 3B und 3C verschiedene Phasen während des Verschliessens des Trockeneis-Behälters mittels des erfindungsgemässen Apparats von Fig. 1 und Fig. 2 zeigen;
Fig. 4A, 4B, 4C und 4D verschiedene Phasen während des Befüllens und Verschliessens des Trockeneis-Behälters mittels des erfindungsgemässen Apparats von Fig. 1 und Fig. 2 zeigen; und
Fig. 5A, 5B und 5C verschiedene Phasen während des Ausstossens von Trockeneis aus dem erfindungsgemässen Apparat von Fig. 1 und Fig. 2 zeigen.

### Detailierte Beschreibung der Erfindung

### Wesentliche Eigenschaften des Apparats zur Herstellung, Bereitstellung und Abfüllung von Trockeneis in einen Behälter:

Der Apparat enthält einen Schalter 1, einen Stössel 2, eine Düsen-Halterung 3, eine Düse 4, eine Membran 5, eine Membran-Halterung 6, eine Drehscheibe 9 und ein Abdeckblech 10.

Der bewegliche Stössel 2 ist auf der feststehenden Düsen-Halterung 3 geführt.

Der Stössel 2 drückt auf den Schalter 1, wenn der Druck in der Produktionskammer P über einen bestimmten Wert ansteigt.

Der Stössel 2 kann das Trockeneis aus der Produktionskammer P schieben.

Die Membran 5 wird in der Membran-Halterung 6 durch den Ring 8 gehalten.

Der an der Membran-Halterung 6 angebrachte Ring 8 wird mit einer Kraft F gegen die Drehscheibe 9 gedrückt.

Mit der Drehscheibe 9 kann die Produktionskammer P geöffnet und geschlossen werden.

Die Drehscheibe 9 hat Öffnungen 11, z.B. Löcher.

Das Abdeckblech 10 hält den Behälter 14 immer in der richtigen, vordefinierten Position.

Das Einführen sowie die Entnahme des Behälters 14 ist ausschliesslich an den dafür vordefinierten Positionen möglich.

Die Form des Abdeckblechs 10 gewährleistet ein ausschliesslich korrektes Einführen des Behälters 14 in die dafür vordefinierte Position in der Drehscheibe 9.

Die Kante 13 der Öffnung 12 kann den Deckel des Behälters 14 umbiegen, an den Behälter 14 drücken und diesen verschliessen.

### Apparat zur Herstellung von Trockeneis:

Bei den vorgesehenen Anwendungen wird das Trockeneis mit flüssigem CO₂ aus einer unter Druck stehenden CO₂-Flasche mit Tauchrohr hergestellt. Der Apparat bereitet das Trockeneis je nach Anwendung zur Verwendung verschieden auf.

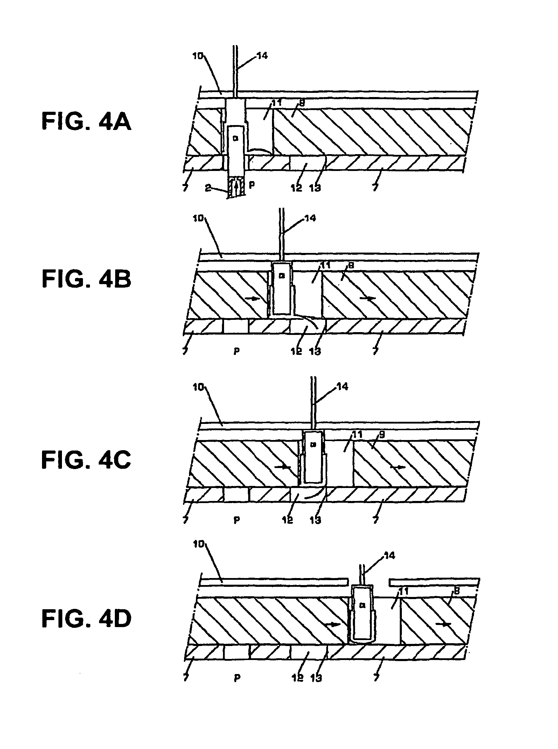

FIG. 4: Zum Schutz der Anwender wird bei der Anwendung von Trockeneis in Getränken das Trockeneis am Ende des Herstellprozesses von der Produktionskammer P in einen Behälter 14 mit Öffnungen geschoben. Anschliessend wird der Behälter 14 verschlossen. Der Behälter 14 ist an einem Stab angebracht.

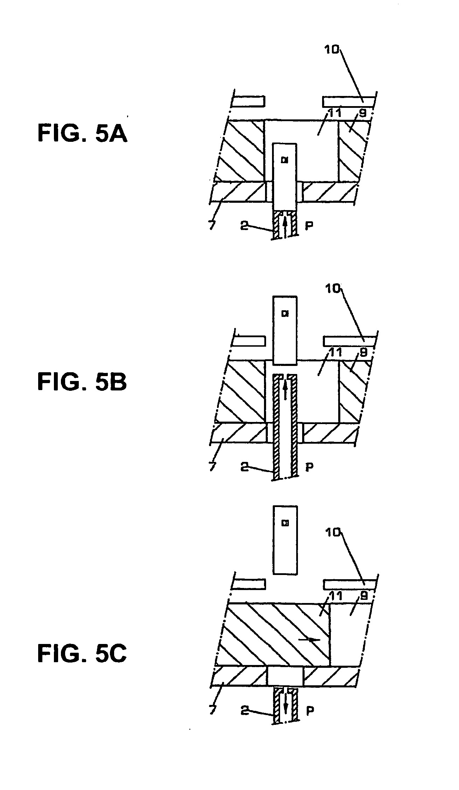

FIG 5: Bei der Anwendung zur Lagerung von temperaturempfindlichen Substanzen wird das Trockeneis am Ende des Herstellprozesses direkt aus der Produktionskammer P geschoben.

Der Apparat funktioniert vollautomatisch per Tastendruck und zeichnet sich durch eine einfache und sichere Handhabung aus.

### Stössel:

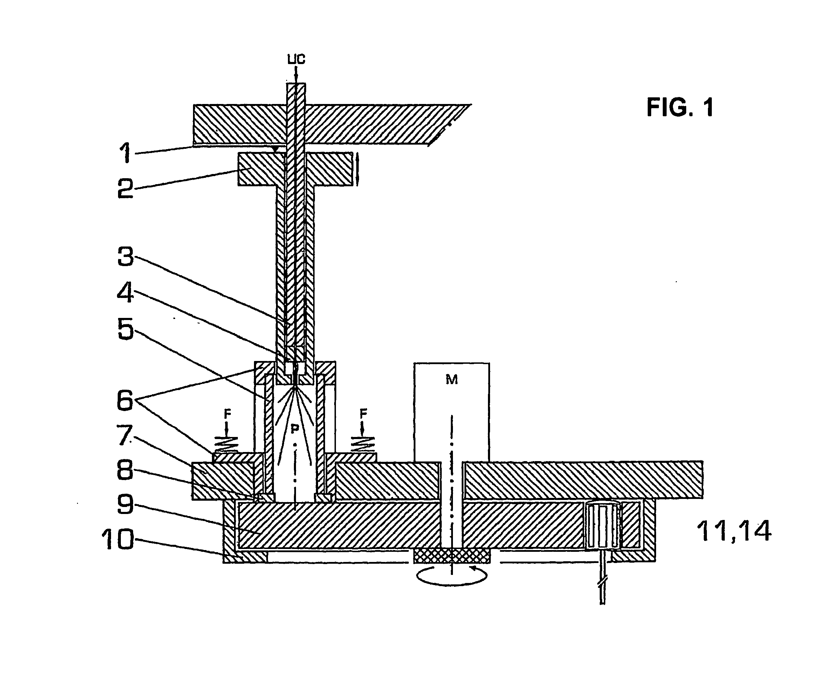

FIG. 1: Der bewegliche Stössel 2 ist auf der feststehenden Düsen-Halterung 3 geführt.

FIG. 1: Wenn beim Einströmen des flüssigen CO₂ LIC in die geschlossene Produktionskammer P der Druck in der Produktionskammer P über einen bestimmten Wert ansteigt, drückt der Stössel 2 auf den Schalter 1. Die CO₂-Zufuhr wird unterbrochen.

FIG. 4 und FIG. 5: Wenn das Trockeneis fertig gestellt und die Produktionskammer P offen ist, schiebt der Stössel 2 das Trockeneis aus der Produktionskammer P. Bei diesem Vorgang wird das Trockeneis zusätzlich verdichtet.

### Membran-Halterung und Membran:

FIG. 1: Der an der Membran-Halterung 6 angebrachte Ring 8 wird mit einer Kraft F gegen die Drehscheibe 9 gedrückt und dichtet somit die Produktionskammer P gegen ausströmende Trockeneis-Partikel ab. Nach der Entfernung des Abdeckblechs 10, der Drehscheibe 9 und des Rings 8 kann die Membran 5 ausgewechselt werden.

Die Membran-Halterung 6 hält die Membran 5 und verstärkt die Membran 5 zudem gegen Überdruck im Innern der Produktionskammer P. Im Bereich der Membran 5 hat die Membran-Halterung 6 Öffnungen, z.B. Schlitze. Diese Öffnungen gewährleisten, dass das CO₂-Gas ausströmen kann.

Die Membran 5 ist ein gaspermeables, kurzes Rohr Sie hat den Zweck, die Trockeneis- Partikel in der Produktionskammer P zurückzuhalten und das CO₂- Gas entweichen zu lassen.

### Düsen-Halterunq und Düse:

FIG. 1: Die Einspritzung des flüssigen CO₂ LIC in die Produktionskammer P erfolgt über die feststehende Düsen-Halterung 3 durch die Düse 4. Es ist dafür gesorgt, dass das flüssige CO₂ nicht in den Bohrungen zu Trockeneis wird.

### Drehscheibe und Abdeckblech:

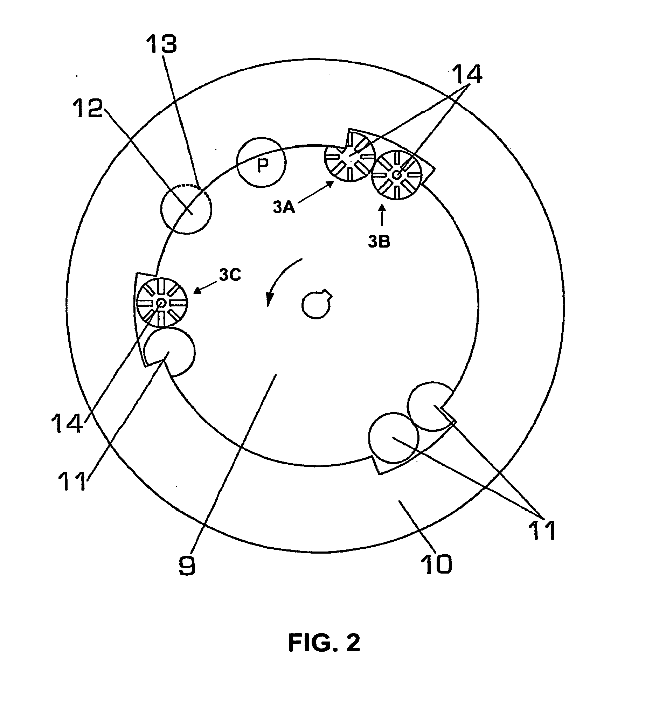

FIG. 1 und 2: Mit der Drehscheibe 9 wird die Produktionskammer P geöffnet und geschlossen. Die Drehscheibe 9 und das Abdeckblech 10 können vom Apparat genommen werden, z.B. zur Reinigung.

FIG. 2: Die Drehscheibe 9 hat Öffnungen 11 z.B. Löcher zur Aufnahme von Behältern 14.

Das Einlegen sowie die Entnahme eines Behälters 14 sind ausschliesslich an den dafür vordefinierten Positionen möglich.

Der Behälter 14 kann aufgrund der Form des Abdeckblechs 10 ausschliesslich in die richtige, dafür vordefinierte Position in der Drehscheibe 9 platziert werden. Ein unsachgemässes, d.h. verdrehtes bzw. falsches Einführen des Behälters 14 ist somit ausgeschlossen.

FIG. 4B bis 4D: Beim Verschlussvorgang stellt das Abdeckblech 10 sicher, dass der Behälter 14 in der vordefinierten Position fixiert bleibt und der Deckel ordnungsgemäss verschlossen wird.

FIG. 2: Die Öffnung der Produktionskammer P liegt zum Zeitpunkt der Trockeneis- Herstellung zwischen zwei Öffnungen 11, d.h. die Produktionskammer P ist geschlossen.

### Einlegen und Entnahme des Behälters aus der Öffnung:

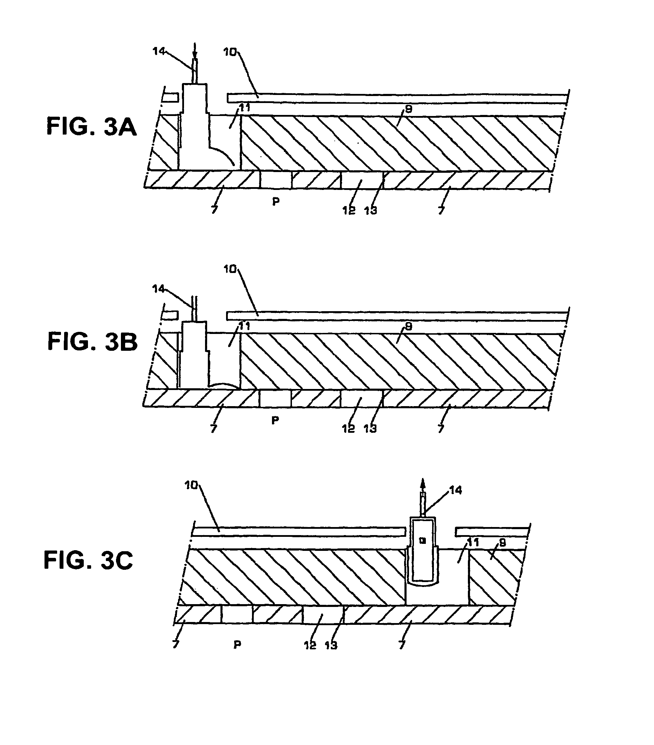

FIG. 3A: Wenn kein Trockeneis produziert wird, steht die Drehscheibe 9 still. Jetzt kann der z.B an einem Stab angebrachte, offene Behälter 14 in die Öffnungen 11 der Drehscheibe 9 eingeführt werden.

FIG. 2: Dabei ist durch die Form des Abdeckblechs 10 sicher gestellt, dass der offene Behälter 14 ausschliesslich in die richtige, dafür vordefinierte Position platziert wird.

FIG. 3B: Der offene Behälter 14 rastet in der vordefinierten Position in der Öffnung 11 der Drehscheibe 9 ein.

FIG. 3C: Die Drehscheibe 9 steht still. Der verschlossene Behälter 14 kann aus der Öffnung 11 entnommen werden.

### Befüllen und Verschliessen des Behälters:

FIG. 4A: Nach der Herstellung des Trockeneises DI dreht die Drehscheibe 9 so, dass die Öffnungen 11 der Drehscheibe 9 bei der Produktionskammer P anhalten.

Die Produktionskammer P ist jetzt offen. Das Trockeneis DI wird mit dem Stössel 2 von der Produktionskammer P in den Behälter 14 geschoben.

FIG. 4B: Die Drehscheibe 9 dreht sich. Der Deckel des Behälters 14 fällt in die Öffnung 12 der Platte 7.

FIG. 4C: Die Drehscheibe 9 dreht sich. Der Deckel des Behälters 14 wird durch die Kante 13 der Öffnung 12 in der Platte 7 umgebogen. Hierbei stellt das Abdeckblech 10 sicher, dass der noch nicht gänzlich verschlossene Behälter 14 in der vordefinierten Position fixiert bleibt und der Deckel ordnungsgemäss verschlossen werden kann.

FIG. 4D: Die Drehscheibe 9 dreht sich. Der Deckel des Behälters 14 wird durch die Kante 13 der Öffnung 12 an den Behälter 14 gedrückt. Der Behälter 14 ist jetzt verschlossen.

### Entnahme des Trockeneises aus der Produktionskammer:

FIG. 5A: Nach der Herstellung des Trockeneises DI dreht die Drehscheibe 9 so, dass die Öffnung 11 der Drehscheibe 9 bei der Produktionskammer P anhält. Die Produktionskammer P ist jetzt offen. Das Trockeneis DI wird mit dem Stössel 2 von der Produktionskammer P in die Öffnung 11 geschoben.

FIG. 5B: Das Trockeneis DI fällt aus der Öffnung 11.

FIG. 5C: Die Drehscheibe 9 dreht sich. Die Produktionskammer P wird geschlossen. Der Produktionsvorgang ist hiermit abgeschlossen und kann von Neuem beginnen.

### Messung des Füllgrads der Produktionskammer:

FIG. 1: Je mehr Trockeneis sich bei der Herstellung in der Produktionskammer P ansammelt, umso weniger kann der Druck des einströmenden CO₂-Gases über die Membran 5 abgebaut werden. Der Druck in der Produktionskammer P steigt. Der bewegliche Stössel 2 wird nach hinten gedrückt und betätigt dabei den Schalter 1. Die CO₂-Zufuhr wird unterbrochen.

Wenn der Stössel 2 nach einer bestimmten Zeit den Schalter 1 nicht betätigt, strömt kein oder zu wenig flüssiges CO₂ in die Produktionskammer P. Die CO₂-Zufuhr wird unterbrochen.

## Patentansprüche

1. Apparat zur Bereitstellung von festem Kohlendioxid, welcher aufweist:
> eine Produktionskammer (P) zur Aufnahme von gasförmigem und festem Kohlendioxid, die zumindest in einem Teilbereich (5) ihrer Wand für gasförmiges Kohlendioxid durchlässig und für festes Kohlendioxid undurchlässig ist;
> eine Düse (4), die in die Produktionskammer (P) mündet und an einen Kohlendioxid-Druckbehälter anschliessbar ist, um mit diesem in Fluidverbindung gebracht zu werden; und
> eine Kammeröffnung, die durch ein Verschlussmittel (9) geöffnet und geschlossen werden kann;
**dadurch gekennzeichnet, dass** an die Kammeröffnung der Produktionskammer (P) ein Behälter (14), zur Verwendung in Getränken, heranführbar ist, der mit in der Produktionskammer (P) gebildetem festem Kohlendioxid befüllbar ist, der Behälter (14) ein durch einen Verschluss verschliessbaren Behälter (14) ist, und welcher durch eine Bewegung der Vorrichtung (9) verschliessbar ist.

2. Apparat nach Anspruch 1, **dadurch gekennzeichnet, dass** er ein Transportmittel (11) aufweist, mittels dem der Behälter (14) an die Kammeröffnung der Produktionskammer (P) heranführbar ist.

3. Apparat nach Anspruch 2, **dadurch gekennzeichnet, dass** das Verschlussmittel (9) und das Transportmittel (11) in einem Verschluss/Transport-Mittel (9, 11) angeordnet sind, das sowohl eine Verschluss-Funktion als auch eine Transport- Funktion hat.

4. Apparat nach einem der Ansprüche 1 bis 3, **dadurch gekennzeichnet, dass** der Teilbereich durch eine Membran (5) gebildet ist.

5. Apparat nach einem der Ansprüche 1 bis 4, **dadurch gekennzeichnet, dass** die Produktionskammer (P) ein Ausstossmittel (2) aufweist, mittels dem in der Produktionskammer (P) gebildetes festes Kohlendioxid aus der Produktionskammer (P) ausstossbar ist.

6. Apparat nach einem der Ansprüche 1 bis 5, **dadurch gekennzeichnet, dass** das Verschlussmittel eine Vorrichtung (9) mit einer Öffnung (11) ist, wobei die Vorrichtung (9) bewegbar ist zwischen einer Schliess-Stellung, in der ein für Gas undurchlässiger Bereich an der Kammeröffnung anliegt und diese verschliesst, und einer Öffnungs-Stellung, in der die Verschlussmittel-Öffnung (11) mit der Kammeröffnung überlappend oder deckungsgleich angeordnet ist und diese freigibt.

7. Apparat nach einem der Ansprüche 1 bis 6, **dadurch gekennzeichnet, dass** das Transportmittel eine in einer Vorrichtung (9) angeordneten Öffnung (11) zur Aufnahme des Behälters (14) ist, wobei die Vorrichtung (9) bewegbar ist zwischen einer Aufnahme-Stellung, in welcher der Behälter (14) in die Öffnung (11) gesetzt werden kann, und einer Befüll-Stellung, in welcher der Behälter (14) mit festem Kohlendioxid aus der Produktionskammer (P) befüllt werden kann.

8. Apparat nach einem der Ansprüche 1 bis 7, **dadurch gekennzeichnet, dass** das Verschlussmittel oder das Verschluss/Transportmittel durch einen Schieber oder eine Drehscheibe (9) gebildet ist.

9. Verfahren zur Bereitstellung von festem Kohlendioxid unter Verwendung einer Apparatur gemäss einem der Ansprüche 1 bis 8, wobei das Verfahren die folgenden Schritte aufweist:
a) schliessen einer Kammeröffnung in einer Produktionskammer (P), die über eine in die Produktionskammer (P) mündende Düse (4) mit einem Kohlendioxid-Druckbehälter in Fluidverbindung steht;
b) befüllen der Produktionskammer (P) über die Düse (4) mit expandierendem gasförmigen Kohlendioxid und sich niederschlagendem festem Kohlendioxid aus dem Kohlendioxid-Druckbehälter, wobei ein Teil des gasförmigen Kohlendioxids über einen für gasförmiges Kohlendioxid durchlässigen und für festes Kohlendioxid undurchlässigen Teilbereich der Kammerwand aus der Produktionskammer (P) entweicht, während zumindest ein Grossteil des gebildeten festen Kohlendioxids in der Produktionskammer (P) zurückgehalten wird;
c) heranführen eines Behälters (14) an die verschlossene Kammeröffnung der Produktionskammer (P);
d) öffnen der Kammeröffnung der Produktionskammer (P); und
e) befüllen des Behälters (14) mit dem, in der Produktionskammer (P) gebildeten, festen Kohlendioxid.

## Claims

1. An apparatus for providing solid carbon dioxide, said apparatus comprising:
> a production chamber (P) for receiving gaseous and solid carbon dioxide, at least a partial region (5) of its wall being permeable to gaseous carbon dioxide and impermeable to solid carbon dioxide;
> a nozzle (4) that leads into the production chamber (P) and can be connected to a carbon dioxide pressure container so as to be fluidically connected therewith; and
> a chamber opening that can be opened and closed by a closure means (9);
**characterized in that** a receptacle (14), for use in drinks, can be advanced to the chamber opening of the production chamber (P) and can be filled with the solid carbon produced in the production chamber (P), and the receptacle (14) is a receptacle (14) that can be closed by a closure and that can be closed by a movement of the device (9).

2. The apparatus according to claim 1, **characterized in that** said apparatus has a transport means (11) by means of which the receptacle (14) can be advanced to the production chamber (P).

3. The apparatus according to claim 2, **characterized in that** the closure means (9) and the transport means (11) are arranged in a closure/transport means (9, 1) that has a closure function as well as a transport function.

4. The apparatus according to any one of the claims 1 to 3, **characterized in that** the partial region is formed by a membrane (5).

5. The apparatus according to any one of the claims 1 to 4, **characterized in that** the production chamber (P) has an ejection means (2) by means of which solid carbon dioxide produced in the production chamber (P) can be ejected from the production chamber (P).

6. The apparatus according to any one of the claims 1 to 5, **characterized in that** the closure means is a device (9) having an opening (11), wherein the device (9) is movable between a closed position in which a region impermeable to gas rests against the chamber opening and closes the same, and an open position in which the closure means opening (11) is arranged overlapping or congruent with the chamber opening and releases the same.

7. The apparatus according to any one of the claims 1 to 6, **characterized in that** the transport means is an opening (11) that is arranged in a device (9) and serves for receiving the receptacle (14), wherein the device (9) is movable between a receiving position in which the receptacle (14) can be inserted into the opening (11), and a filling position in which the receptacle (14) can be filled with solid carbon dioxide from the production chamber (P).

8. The apparatus according to any one of the claims 1 to 7, **characterized in that** the closure means or the closure/transport means is formed by a slider or a rotary disk (9).

9. A method for providing solid carbon dioxide using an apparatus according to any one of the claims 1 to 8, said method comprising the following steps:
a) closing a chamber opening in a production chamber (P), which chamber opening is fluidically connected to a carbon dioxide pressure container via a nozzle (4) that leads into the production chamber (P);
b) filling the production chamber (P) via the nozzle (4) with expanding gaseous carbon dioxide and precipitating solid carbon dioxide from the carbon dioxide pressure container, wherein a portion of the gaseous carbon dioxide escapes from the production chamber (P) via a partial region of the chamber wall, which partial region is permeable to gaseous carbon dioxide and impermeable to solid carbon dioxide, while at least a majority of the produced solid carbon dioxide is retained in the production chamber (P);
c) advancing a receptacle (14) to the closed chamber opening of the production chamber (P);
d) opening the chamber opening of the production chamber (P); and
e) filling the receptacle (14) with the solid carbon dioxide produced in the production chamber (P).

## Revendications

1. Appareil pour la préparation de dioxyde de carbone solide, qui présente :
> une chambre de production (P) destinée à contenir du dioxyde de carbone gazeux et solide, qui est perméable au dioxyde de carbone gazeux et imperméable au dioxyde de carbone solide au moins dans une région partielle (5) de sa paroi ;
> une buse (4) qui débouche dans la chambre de production (P) et peut être raccordée à un réservoir à pression de dioxyde de carbone, pour être mise en communication fluidique avec ce dernier ; et
> une ouverture de chambre qui peut être ouverte et fermée par un moyen de fermeture (9) ;
**caractérisé en ce que** de l'ouverture de chambre de la chambre de production (9), peut être rapproché, en vue de l'utilisation dans des boissons, un récipient (14) qui peut être rempli de dioxyde de carbone solide formé dans la chambre de production (P), le récipient (14) est un récipient (14) pouvant être fermé par une fermeture et qui peut être fermé par un mouvement du dispositif (9).

2. Appareil selon la revendication 1, **caractérisé en ce qu'**il présente un moyen de transport (11) au moyen duquel le récipient (14) peut être rapproché de l'ouverture de chambre de la chambre de production (P).

3. Appareil selon la revendication 2, **caractérisé en ce que** le moyen de fermeture (9) et le moyen de transport (11) sont agencés dans un moyen de fermeture/transport (9, 11) qui a aussi bien une fonction de fermeture qu'une fonction de transport.

4. Appareil selon l'une des revendications 1 à 3, **caractérisé en ce que** la région partielle est formée par une membrane (5).

5. Appareil selon l'une des revendications 1 à 4, **caractérisé en ce que** la chambre de production (P) présente un moyen d'éjection (2) au moyen duquel du dioxyde de carbone solide formé dans la chambre de production (P) peut être éjecté de la chambre de production (P).

6. Appareil selon l'une des revendications 1 à 5, **caractérisé en ce que** le moyen de fermeture est un dispositif (9) présentant une ouverture (11), le dispositif (9) pouvant se déplacer entre une position de fermeture dans laquelle une région imperméable au gaz est adjacente à l'ouverture de chambre et ferme cette dernière, et une position d'ouverture dans laquelle l'ouverture (11) du moyen de fermeture est disposée avec chevauchement ou en superposition par rapport à l'ouverture de chambre et dégage cette dernière.

7. Appareil selon l'une des revendications 1 à 6, **caractérisé en ce que** le moyen de transport est une ouverture (11) formée dans un dispositif (9) et destinée à recevoir le récipient (14), le dispositif (9) pouvant se déplacer entre une position de réception, dans laquelle le récipient (14) peut être placé dans l'ouverture (11), et une position de remplissage, dans laquelle le récipient (14) peut être rempli de dioxyde de carbone solide sortant de la chambre de production (P).

8. Appareil selon l'une des revendications 1 à 7, **caractérisé en ce que** le moyen de fermeture ou le moyen de fermeture/transport est constitué par un coulisseau ou par un disque tournant (9).

9. Procédé de préparation de dioxyde de carbone solide comportant l'utilisation d'un appareil selon l'une des revendications 1 à 8, le procédé comprenant les étapes suivantes :
a) fermer une ouverture de chambre formée dans une chambre de production (P) et qui est en communication fluidique avec un réservoir à pression de dioxyde de carbone par l'intermédiaire d'une buse (4) qui débouche dans la chambre de production (P) ;
b) remplir la chambre de production (P), par l'intermédiaire de la buse (4), de dioxyde de carbone gazeux qui se détend et de dioxyde de carbone solide qui précipite en provenant du réservoir à pression de dioxyde de carbone, une partie du dioxyde de carbone gazeux s'échappant de la chambre de production (P) à travers une région partielle de la paroi de la chambre qui est perméable au dioxyde de carbone gazeux et imperméable au dioxyde de carbone solide, tandis qu'au moins une grande partie du dioxyde de carbone solide formé est retenue dans la chambre de production (P) ;
c) rapprocher un récipient (14) de l'ouverture de chambre fermée de la chambre de production (P) ;
d) ouvrir l'ouverture de chambre de la chambre de production (P) ; et
e) remplir le récipient (14) du dioxyde de carbone solide formé dans la chambre de production (P).
